# EUROPÄISCHE PATENTSCHRIFT

(11) **EP 1 882 917 B1**
(45) Veröffentlichungstag und Bekanntmachung des Hinweises auf die Patenterteilung: **07.04.2010**
(21) Anmeldenummer: 07005863.1
(22) Anmeldetag: 22.03.2007
(51) Int. Cl.: G01J 3/26, G02B 26/00

(54) **Durchstimmbares Dualband-Fabry-Perot-Filter**
Variable dual band Fabry-Perot filter
Filtre Fabry-Pérot variable à double bande

(30) Priorität: 27.07.2006 DE 102006034731
(43) Veröffentlichungstag der Anmeldung: 30.01.2008
(73) Patentinhaber: InfraTec GmbH Infrarotsensorik und Messtechnik, 01217 Dresden (DE)
(72) Erfinder: Neumann, Norbert, 01744 Dippoldiswalde (DE); Ebermann, Martin, 01796 Pirna (DE)
(74) Vertreter: Hofmann, Klaus

(56) Entgegenhaltungen:
- US-A- 4 756 602
- US-A1- 2002 181 107
- US-A1- 2005 249 384
- J.T.TRAUGER: "Broadband dielectric mirror coatings for Fabry-Perot spectroscopy" APPLIED OPTICS, Bd. 15, Nr. 12, Dezember 1976 (1976-12), Seiten 2998-3005, XP007903329

## Beschreibung

Die Erfindung betrifft ein mit mikromechanischen Mitteln gefertigtes Dualband-Fabry-Perot-Filter, das als durchstimmbares Bandpassfilter in der Infrarot-Messtechnik eingesetzt wird.

Mit Hilfe der Infrarot-Spektroskopie können eine Vielzahl von Flüssigkeiten, Gasen und Feststoffen qualitativ und quantitativ einfach analysiert werden. Neben aufwendigen und teuren Gitter-Spektrometern und Fourier-Transform-Interferometern werden Photometer für spektrale Messungen im nahen bis fernen Infrarotbereich benutzt. Mittels spezieller schmalbandiger Bandpassfilter werden definierte Bereiche aus dem Gesamtspektrum herausgefiltert und für die Messung der stoffspezifischen Eigenschaften verwendet. Für einfache Messaufgaben, reichen häufig ein bzw. zwei spektrale Kanäle aus. Dafür werden Infrarot-Detektoren bereits durch den Hersteller mit Schmalbandfiltern ausgerüstet. Die Messung in mehreren Spektralkanälen erfordert aber zur spektralen Selektion eine Konstruktion aus breitbandigem Sensor und motorbetriebenen Filterrad. Die seit vielen Jahrzehnten industriell gefertigten Filterrad-Konstruktionen sind nicht miniaturisierbar, teuer und aufgrund der bewegten Teile störanfällig.

Eine weitere bevorzugte Lösung stellt die Verwendung eines durchstimmbaren Filters auf der Basis eines Fabry-Perot-Filters (FP-Filter) dar. Ein durchstimmbares FP-Filter ist eine planparallele Spiegelanordnung, die einen Resonatorraum umgibt. Die spektrale Abstimmung des Filters erfolgt durch die Abstandsänderung der Spiegel. Der spektrale Reflexionsgrad der Spiegel bestimmt wesentliche Eigenschaften des Filters, wie z.B. die Halbwertsbreite der Filterkurve, die maximale und die minimale Transmission. Anstelle von metallischen Reflektor-Schichten, die eine zu hohe Absorption aufweisen, werden dielektrische Schichtstapel als Reflektoren verwendet. Diese Reflektoren sind aus alternierenden hochbrechenden (H) und niedrigbrechenden (L) dielektrischen Schichten mit einer optischen Dicke von λ₀/4 aufgebaut und werden als Distributed-Bragg-Reflektoren (DBR) bezeichnet. Aufeinanderfolgende H- und L-Schichten werden zu einer Periode zusammengefasst. Mit zunehmender Anzahl der HL-Perioden erhöht sich der Reflexionsgrad. Die Breite des mit Stoppband bezeichneten Bereiches mit hoher Reflexion wird aber wesentlich vom Brechzahl-Quotienten n_{H}/n_{L} bestimmt. So erreicht man mit dem Stapel (HL)², das heißt zwei Perioden HL, aus niedrigbrechenden SiO₂- und hochbrechenden p-Si-Schichten eine Reflexion von 94% für eine Referenzwellenlänge von 4 µm und ein etwa 2 µm breites Stoppband von 3 µm bis 5 µm. Durch Stapeln mehrerer DBR mit unterschiedlichen Referenzwellenlängen kann das Stoppband ausgedehnt werden. Dadurch erhöht sich aber die Zahl der abzuscheidenden Schichten erheblich. Mehr Schichten treiben aber den Fertigungsaufwand in die Höhe. Schichtspannungen in den Schichten können zum Abplatzen der Schichten oder zur Verbiegung des Reflektor-Substrats führen.

Aufbauten, die sich der Distributed-Bragg-Reflektoren und λ₀/4-Schichten bedienen, sind z. B. in DE 102 26 305 Cl, US 6,618,199 B2, EP 1 126 256 A2, EP 0 668 490 A2,

US 005, 646, 729A, und DE 43 34 578 A1 wiederholt beschrieben worden. Nachteilig ist, dass die Filter immer nur für einen Spektralbereich ausgelegt sind, z.B. in EP 1 126 256 A2 für den Bereich 2,7...4,5 µm. Häufig werden polykristallines Silizium als hochbrechende Schicht und Siliziumdioxid und Siliziumnitrid als niedrigbrechende Schicht verwendet. In DE 102 26 305 Cl werden Bragg-Reflektoren aus zwei und drei Doppelstapeln aus Poly-Si-Schichten und SiO₂-Schichten mit einer optischen Dicke von λ₀/4 für den Spektralbereich 3...4,5 µm verwendet. In US 6,618,199 B2 werden zwei einzelne Bragg-Reflektoren mit unterschiedlichen Referenzwellenlängen λ₀ aufeinander angeordnet, um den Spektralbereich zu erweitern. Der Reflektor hat die Schichtfolge (H/2|L|H/2)ⁿ¹(L/2|H|L/2)ⁿ², wobei die Anzahl der Schichten n1 und n2 zwischen 7 und 20 liegt. Ein Reflektor mit der Schichtfolge p-Si|SiN|p-Si mit einer optischen Gesamtschichtdicke von λ₀/4 wird in EP 1 126 256 A2 als bewegliche Membran benutzt, wobei die mittlere SiN-Schicht zur Stresskompensation eingesetzt wird. Bragg-Reflektoren aus λ₀/4-dicken p-Si-Schichten und SiO₂-Schichten werden auch in EP 0 668 490 a2 und US 5,646,729 verwendet, wobei der feste Reflektor aus der Schichtfolge si|siO₂|p-Si|siO₂| gebildet wird und der bewegliche Reflektor aus der Schichtfolge p-Si|SiO₂|p-Si besteht.

In US 2002/181107 A1 wird ein Fabry-Perot-Filter beschrieben, bei dem Einzelbandreflektoren aufeinander geschichtet sind, wobei die Gesamtzahl der Einzelschichten inklusive der Index-Match-Schicht zwischen 43 und 121 liegen. Es werden Einschränkungen für die Brechzahl der hoch- und niedrigbrechenden Schichten bzw. für das Verhältnis n_{L}/n_{H} formuliert, die sich aus der spektralen Lage des Referenz- und Signalbandes ergeben. Das schränkt die Materialauswahl für die hoch- und niedrigbrechenden Schichten erheblich ein.

Der Erfindung liegt die Aufgabe zugrunde, ein mikromechanisches, durchstimmbares Dualband-Fabry-Perot-Filter mit einem Reflektor zu schaffen, der in mindestens zwei Spektralbereichen, vorzugsweise in den sogenannten atmosphärischen Fenstern 3...5 µm und 8...12 µm eine hohe Reflexion aufweist und aus wenigen dielektrischen Schichten besteht.

Erfindungsgemäß wird die Aufgabe durch einen Reflektor entsprechend der Merkmale des Anspruchs 1 gelöst. Ausgestaltende Merkmale sind in den Ansprüchen 2 bis 7 beschrieben.

Grundelement des Filters ist ein Reflektor mit einer symmetrischen Schichtfolge aus drei λ₀/4-Schichten, wobei die mittlere Schicht entweder eine niedrig- oder hochbrechende Schicht und die beiden äußeren hoch- oder niedrigbrechende Schichten sind, so dass die Schichtfolge HLH oder LHL entsteht. Werden mindestens zwei Perioden gestapelt, so entsteht eine Kombination von λ₀/2- und λ₀/4-Schichten, die zur Ausbildung von zwei Stoppbändern führt. Die Stoppbänder sind durch ein Passband mit lokalen Minima und Maxima der Reflexion getrennt. Die Mitte des Passbandes wird durch die Referenzwellenlänge λ₀ vorgegeben, während beim Bragg-Reflektor die Referenzwellenlänge λ₀ in der Mitte des Stoppbandes liegt. Mit bereits einer λ₀/2-dicken Schicht kann ein Dualband-Reflektor konstruiert werden, der eine hohe Reflexion von über 95% in den Spektralbereichen 3...5 µm und 8...12 µm aufweist.

Nachfolgend wird die Erfindung an einem Ausführungsbeispiel näher erläutert. Es zeigen:
- Fig. 1: Schematische Darstellung eines Bragg-Reflektors Luft|(HL)²H|Si-Substrat mit zwei Perioden (HL)
- Fig. 2: Schematische Darstellung eines Dualband-Reflektors Luft|H(HLH)²H|Si-Substrat mit zwei Perioden (HLH)
- Fig. 3: Vergleich der berechneten spektralen Reflexionsgrade von Bragg-Reflektor und Dualband-Reflektor
- Fig. 4: Gemessener spektraler Reflexionsgrad eines Dualband-Reflektors
- Fig. 5: Durchstimmbares Fabry-Perot-Filter mit Dualband-Reflektor
- Fig. 6: Filterkurven beim Abstimmen eines Dualband-FP-Filters

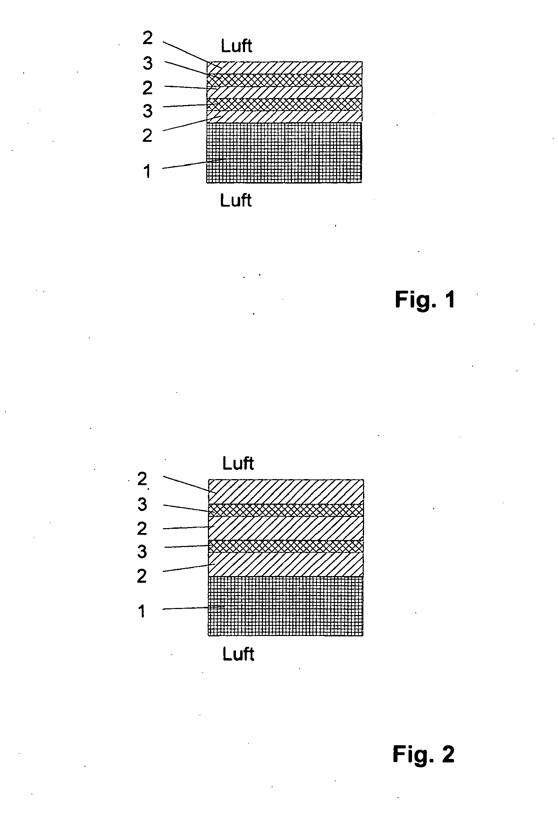

Der in Fig. 1 dargestellte Reflektor benutzt einkristallines Silizium mit einer Dicke von 500 µm als Substrat 1. Darauf werden nacheinander hochbrechende PbTe-Schichten 2 und niedrigbrechende BaF₂-Schichten 3 aufgebracht. Die BaF₂-Schichten 3 haben eine Brechzahl von etwa 1,47 und eine ne physikalische Dicke von 0,98 µm. Die PbTe-Schichten 2 haben eine Brechzahl von etwa 5,8 und eine physikalische Dicke von 0,25 µm. Die physikalischen Schichtdicken sind so gewählt, dass bei einer Referenzwellenlänge λ₀ von 5,73 µm die optischen Schichtdicken n*d jeweils λ₀/4, also 1,43 µm betragen. Insgesamt werden fünf Schichten alternierend aufgebracht. Als Abkürzung für eine hoch- und niedrigbrechende optische λ₀/4-Schicht werden die Symbole H und L benutzt. Der Schichtaufbau des Bragg-Reflektors kann folglich auch mit der Schreibweise Luft|H L H L H|Si oder Luft|(HL)^{2,5}||Si oder Luft|(HL)²H||Si symbolisiert werden.

Der in Fig. 2 dargestellte Dualband-Reflektor benutzt ebenfalls einkristallines Silizium mit einer Dicke von 500 µm als Substrat 1. Darauf werden abwechselnd λ₀/2-PbTe-Schichten 2 mit einer physikalischen Dicke von 0,5 µm und λ₀/4-BaF₂-Schichten 3 mit einer physikalischen Dicke von 0,98 µm aufgebracht, wobei die letzte Schicht eine λ₀/2-PbTe-Schicht 3 ist. Insgesamt werden fünf Schichten abwechselnd aufgebracht. Der Schichtaufbau des Dualband-Reflektors kann durch die Schreibweisen Luft|2H L 2H L 2H|Si oder Luft|2HL|^{2,5}|Si oder Luft|H(HLH)²H|Si wiedergegeben werden.

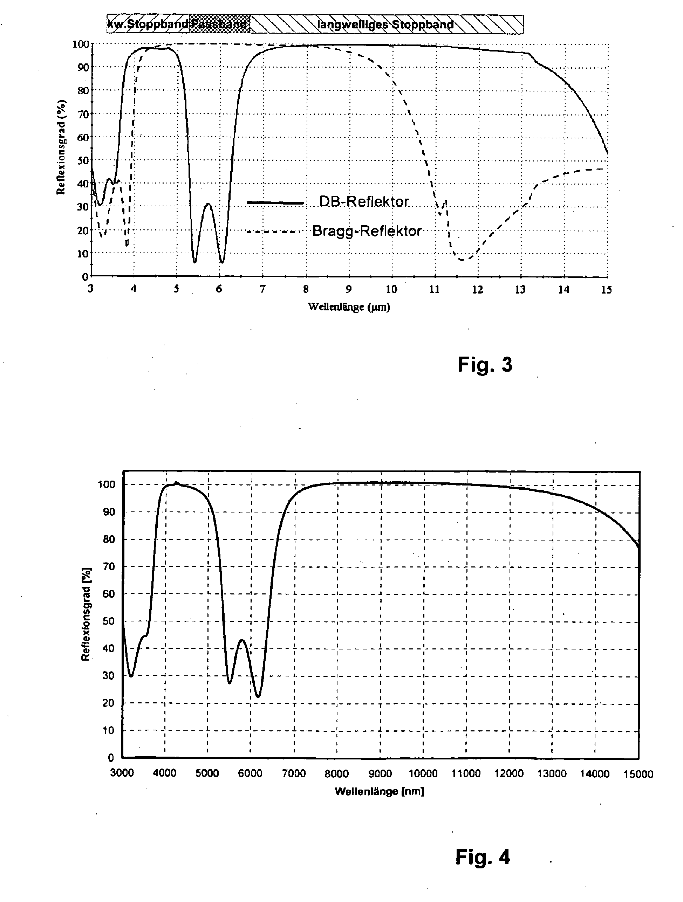

In Fig. 3 sind die berechneten Reflexionsgrade des Bragg-Reflektors aus Fig. 1 und des Dualband-Reflektors aus Fig. 2 dargestellt. Beide Reflektoren bestehen aus fünf Material-Schichten, wobei PbTe als hochbrechende Schicht 2 und BaF₂ als niedrigbrechende Schicht 3 verwendet wird. Während der normale Bragg-Reflektor ein Stoppband von 4,2...µm aufweist, hat der Dualband-Reflektor ein kurzwelliges Stoppband 15 von 3,7...5,1 µm und ein langwelliges Stoppband 16 von 6,4...14 µm. Von 5,1...6,4 µm beobachtet man im Passband 17 lokale Minima und Maxima der Reflexion. Man erreicht maximale Reflexionsgrade von über 99% im langwelligen Stoppband 16 des Dualband-Reflektors und über 97% im kurzwelligen Stoppband 15 des Dualband-Reflektors. Beim Bragg-Reflektor erreicht man ebenfalls einen Reflexionsgrad von über 99% im Stoppband.

In Fig. 4 ist die gemessene Reflexion eines Dualband-Reflektors Luft |H(HLH)²H| Si (Referenzwellenlänge λ₀ : 5,7 µm) dargestellt. Die Übereinstimmung mit der Berechnung ist sehr gut. Das Reflexionsgrade über 100% gemessen wurden, liegt an der verwendeten Referenzprobe aus goldbeschichtetem Silizium und der photometrischen Genauigkeit des verwendeten Fourier-Transform-Infrarot-Interferometers und des Reflexionszusatzes.

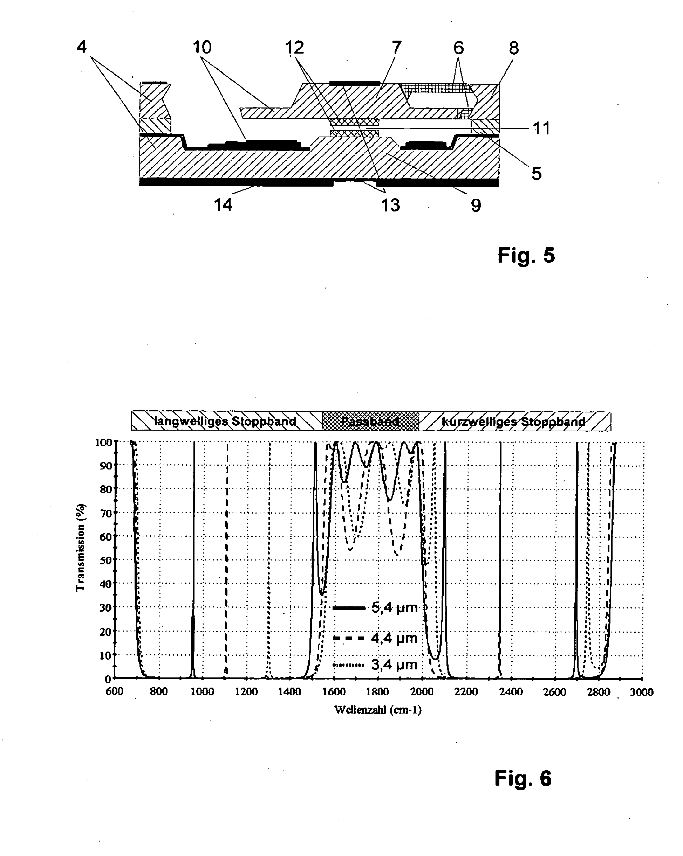

Das in Fig. 5 dargestellte durchstimmbare FP-Filter entsteht aus vorstrukturierten Siliziumwafern 4, die durch eine polymere SU8-Bondschicht 5 verbunden werden. Biegefedern 6 mit 45°-Ausrichtung verbinden die Eckpunkte des beweglichen Reflektorträgers 7 mit dem Rahmen 8. Der bewegliche Reflektorträger 7 wird elektrostatisch in Richtung zum feststehenden Reflektorträger 9 durch Anlegen einer Steuerspannung an die Elektrodenpaare 10 aus seiner Ruhelage bewegt. Der Resonanzraum ist hier als Luftspalt 11 zwischen den Dualband-Reflektoren 12 ausgebildet. Im Ruhezustand beträgt er 5,4 µm. Durch Verwendung einer Antireflexbeschichtung 13 auf der jeweiligen Gegenseite wird eine Entspiegelung erreicht. Eine Blende 14 auf dem feststehenden Spiegelträger 9 bestimmt in Verbindung mit den Dualband-Reflektoren 12 die optisch aktive Fläche des FP-Filters.

Fig. 6 veranschaulicht die Ausbildung von schmalbandigen Durchlasskurven eines Dualband-FP-Filters beim Durchstimmen. Die Dualband-Reflektoren haben den Aufbau H(HLH)²H mit Germanium als hochbrechender Schicht und einem Metall-Fluorid als niedrigbrechender Schicht. Zwischen den DB-Reflektoren befindet sich ein einstellbarer Luftspalt. Die Transmission ist über der Wellenzahl aufgetragen, um die Übersichtlichkeit zu verbessern. Die Referenzwellenzahl liegt bei 1782 cm⁻¹, was einer Referenzwellenlänge von 5,6 µm entspricht und bezeichnet die Mitte des Passbandes 17 zwischen dem kurzwelligen Stoppband 15 und dem langwelligen Stoppband 16, die sich näherungsweise symmetrisch von der Referenzwellenzahl von 2050...2820 cm⁻¹ (4,8... 3,5 mm) und 710...1480 cm⁻¹ (14,0...6,8 µm) erstrecken und jeweils eine Breite von etwa 770 cm⁻¹ haben. Bei einem Luftspalt von 5,4 µm beobachtet man die erste Interferenz im langwelligen Stoppband 16 bei 955 cm⁻¹ (10,5 µm). Eine zweite Interferenz tritt bei 1510 cm⁻¹ (6,6 µm) auf. Im kurzwelligen Stoppband 15 folgen Interferenzen bei 2100 cm⁻¹ (4,8 µm) und 2695 cm⁻¹ (3,7 µm). Bei Verringerung des Luftspaltes auf 4,4 µm wandert im langwelligen Stoppband 16 die erste Interferenz auf 1105 cm⁻¹ (9,1 µm) und die zweite verschwindet bei 1570 cm⁻¹ (6,4µm) im Passband 17. Im kurzwelligen Stoppband 15 ist die nächste Interferenz bei 2345 cm⁻¹ (4,3 µm) voll ausgebildet.

Bei weiterer Verringerung des Luftspaltes auf 3,4 µm wandert die erste Interferenz im langwelligen Stoppband 16 auf 1300 cm⁻¹ (7,7 µm). Im kurzwelligen Stoppband 15 tritt die nächste Interferenz an der Grenze des Stoppbandes bei 2050 cm⁻¹ (4,9 µm) auf, gefolgt von einer weiteren bei 2750 cm⁻¹ (4,0 µm).

### Bezugszeichenaufstellung

- 1: Silizium-Substrat
- 2: hochbrechende PbTe-Schicht
- 3: niedrigbrechende BaF₂-Schicht
- 4: Siliziumwafer
- 5: SU8-Bondschicht
- 6: Biegefeder
- 7: beweglicher Reflektorträger
- 8: Rahmen
- 9: fester Reflektorträger
- 10: Elektrodenpaar
- 11: Luftspalt
- 12: Dualband-Reflektor
- 13: Antireflexbeschichtung
- 14: Blende
- 15: kurzwelliges Stoppband
- 16: langwelliges Stoppband
- 17: Passband

## Patentansprüche

1. Mikromechanisches, durchstimmbares Dualband-Fabry-Perot-Filter, bestehend aus an zwei gegenüberliegenden Reflektorträgern angebrachten Dualband-Reflektoren, welche durch einen Resonanzraum getrennt sind, dessen optische Dicke veränderbar ist, **dadurch gekennzeichnet, dass**
- die Dualband-Reflektoren alternierend aus hochbrechenden Schichten (2) mit einem Brechungsindex zwischen 3 und 5,9 und niedrigbrechenden Schichten (3) mit einem Brechungsindex zwischen 1,2 und 2,5 bestehen,
- die Dualband-Reflektoren aus mindestens insgesamt fünf alternierenden hochbrechenden Schichten (2) und niedrigbrechenden Schichten (3) mit einer optische Dicke von λ₀/4 und λ₀/2 bestehen und mindestens eine λ₀/2-Schicht vorhanden ist, welche zwischen λ₀/4-Schichten eingebettet ist,
- die Dualband-Reflektoren hochbrechende Schichten (2) und niedrigbrechende Schichten (3) mit einer optische Dicke von λ₀/4 und λ₀/2 aufweisen, die Referenzwellenlänge λ₀ zwischen 4 µm und 7 µm liegt und die Mitte eines Passbandes vergibt.

2. Filter nach Anspruch 1, **dadurch gekennzeichnet, dass** der Dualband-Reflektor abwechselnd aus hochbrechenden (2) und niedrigbrechenden (3) Schichten besteht, welche die Schichtfolge (HLH) bilden und diese Schichtfolge mindestens zweimal vorhanden ist.

3. Filter nach Anspruch 2, **dadurch gekennzeichnet, dass** zusätzlich eine weitere hochbrechende λ₀/4-Schicht (3) auf einer Seite der Schichtfolge aufgebracht ist, wodurch entweder die Schichtfolge H(HLH)ⁿ oder die Schichtfolge (HLH)ⁿH gebildet wird.

4. Filter nach Anspruch 2, **dadurch gekennzeichnet, dass** zusätzlich zwei weitere hochbrechende λ₀/4-Schichten (3) auf beiden Seite der Schichtfolge aufgebracht sind, wodurch die Schichtfolge H(HLH)ⁿH gebildet wird.

5. Filter nach Anspruch 1, **dadurch gekennzeichnet, dass** der Reflektor aus hochbrechenden (2) und niedrigbrechenden (3) Schichten bestehen, welche die Schichtfolge (LHL) bilden und diese Schichtfolge mindestens zweimal vorhanden ist.

6. Filter nach Anspruch 5, **dadurch gekennzeichnet, dass** zusätzlich eine weitere hochbrechende λ₀/4-Schicht (3) auf einer Seite der Schichtfolge aufgebracht ist, wodurch entweder die Schichtfolge H(LHL)ⁿ oder die Schichtfolge (LHL)ⁿH gebildet wird.

7. Filter nach Anspruch 5, **dadurch gekennzeichnet, dass** zusätzlich zwei weitere hochbrechende λ₀/4-Schichten (3) auf beiden Seite der Schichtfolge aufgebracht sind, wodurch die Schichtfolge H(LHL)ⁿH gebildet wird.

## Claims

1. Micromechanical, tuneable dual-band Fabry-Perot filter, consisting of dual-band reflectors attached to two opposing reflector supports and separated by a resonator cavity whose optical thickness may be varied, **characterized in that**
- the dual-band reflectors alternately consist of high-refractive layers (2) with a refractive index between 3 and 5.9 and low-refractive layers (3) with a refractive index between 1.2 and 2.5,
- the dual-band reflectors consist of a total of at least five alternate high-refractive layers (2) and low-refractive layers (3) with an optical thickness of λ₀/4 and λ₀/2 and at least one λ₀/2 layer is present which is embedded between λ₀/4 layers,
- the dual-band reflectors have high-refractive layers (2) and low-refractive layers (3) with an optical thickness of λ₀/4 and λ₀/2, the reference wavelength λ₀ lies between 4 µm and 7 µm and assigns the centre of a pass band.

2. Filter according to Claim 1, **characterized in that** the dual-band reflector alternately consists of high-refractive layers (2) and low-refractive layers (3), which form the layer sequence (HLH), and this layer sequence occurs at least twice.

3. Filter according to Claim 2, **characterized in that** a further high-refractive λ₀/4 layer (3) is additionally applied to one side of the layer sequence, as a result of which either the layer sequence H(HLH)ⁿ or the layer sequence (HLH)ⁿH is formed.

4. Filter according to Claim 2, **characterized in that** two further high-refractive λ₀/4 layers (3) are additionally applied to both sides of the layer sequence, as a result of which the layer sequence H(HLH)ⁿH is formed.

5. Filter according to Claim 1, **characterized in that** the reflector consists of high-refractive layers (2) and low-refractive layers (3), which form the layer sequence (LHL), and this layer sequence occurs at least twice.

6. Filter according to Claim 5, **characterized in that** a further high-refractive λ₀/4 layer (3) is additionally applied to one side of the layer sequence, as a result of which either the layer sequence H(LHL)ⁿ or the layer sequence (LHL)ⁿH is formed.

7. Filter according to Claim 5, **characterized in that** two further high-refractive λ₀/4 layers (3) are additionally applied to both sides of the layer sequence, as a result of which the layer sequence H(LHL)ⁿH is formed.

## Revendications

1. Filtre de Fabry-Pérot micromécanique accordable à double bande, composé de réflecteurs à double bande montés sur deux porte-réflecteurs opposés et séparés par un espace de résonance dont l'épaisseur optique est modifiable, **caractérisé en ce que**
- les réflecteurs à double bande se composent en alternance de couches à haute réfringence (2) ayant un indice de réfringence compris entre 3 et 5,9 et de couches à faible réfringence (3) ayant un indice de réfringence compris entre 1,2 et 2,5,
- les réflecteurs à double bande se composent au total d'au moins cinq couches alternées à haute réfringence (2) et à faible réfringence (3) ayant une épaisseur optique de λ₀/4 et de λ₀/2 et il existe au moins une couche λ₀/2 qui est incluse entre des couches λ₀/4,
- les réflecteurs à double bande présentent des couches à haute réfringence (2) et à faible réfringence (3) ayant une épaisseur optique de λ₀/4 et de λ₀/2, la longueur d'onde de référence λ₀ est comprise entre 4 µm et 7 µm et définit le centre d'une bande passante.

2. Filtre selon la revendication 1, **caractérisé en ce que** le réflecteur à double bande se compose en alternance de couches à haute réfringence (2) et de couches à faible réfringence (3) qui forment la séquence de couches (HLH) et cette séquence de couches est présente au moins deux fois.

3. Filtre selon la revendication 2, **caractérisé en ce qu'**une couche λ₀/4 à haute réfringence (3) supplémentaire est en plus appliquée sur un côté de la séquence de couches, ce qui forme soit la séquence de couches H(HLH)", soit la séquence de couches (HLH)"H.

4. Filtre selon la revendication 2, **caractérisé en ce que** deux couches λ₀/4 à haute réfringence (3) supplémentaires sont en plus appliquées des deux côtés de la séquence de couches, ce qui forme la séquence de couches H(HLH)"H.

5. Filtre selon la revendication 1, **caractérisé en ce que** le réflecteur se compose de couches à haute réfringence (2) et de couches à faible réfringence (3) qui forment la séquence de couches (LHL) et cette séquence de couches est présente au moins deux fois.

6. Filtre selon la revendication 5, **caractérisé en ce qu'**une couche λ₀/4 à haute réfringence (3) supplémentaire est en plus appliquée sur un côté de la séquence de couches, ce qui forme soit la séquence de couches H(LHL)", soit la séquence de couches (LHL)"H.

7. Filtre selon la revendication 5, **caractérisé en ce que** deux couches λ₀/4 à haute réfringence (3) supplémentaires sont en plus appliquées des deux côtés de la séquence de couches, ce qui forme la séquence de couches H(LHL)"H.
